# EUROPÄISCHE PATENTSCHRIFT

(11) **EP 2 553 524 B1**
(45) Veröffentlichungstag und Bekanntmachung des Hinweises auf die Patenterteilung: **19.11.2014**
(21) Anmeldenummer: 11707861.8
(22) Anmeldetag: 11.03.2011
(51) Int. Cl.: G02F 1/35, G02F 1/37

(54) **ANORDNUNG UND VERFAHREN ZUR FREQUENZKONVERSION VON LASERSTRAHLUNG**
ASSEMBLY AND METHOD FOR FREQUENCYCONVERSION OF LASER RADIATION
ASSEMBLAGE ET MÉTHODE POUR LA CONVERSION EN FRÉQUENCE DE RAYONNEMENT LASER

(30) Priorität: 01.04.2010 DE 102010003591
(43) Veröffentlichungstag der Anmeldung: 06.02.2013
(73) Patentinhaber: Trumpf Laser Marking Systems AG, 7214 Grüsch (CH)
(72) Erfinder: DONG, Shalei, 79639 Grenzach-Wyhlen (DE); JOOSTEN, Sven, CH-7235 Fideris (CH); ZIOLEK, Carsten, CH-7212 Seewis Dorf (CH)
(74) Vertreter: Kohler Schmid Möbus
(86) Internationale Anmeldenummer: PCT/EP2011/053687
(87) Internationale Veröffentlichungsnummer: WO 2011/120777

(56) Entgegenhaltungen:
- EP-A2- 0 854 380
- DE-A1- 10 143 709

## Beschreibung

Die vorliegende Erfindung betrifft eine Anordnung zur Frequenzkonversion von Laserstrahlung, umfassend: einen ersten nichtlinearen Kristall, in dem aus einem ersten eintretenden Laserstrahl mit einer ersten Wellenlänge durch Frequenzverdopplung ein zweiter Laserstrahl mit einer zweiten Wellenlänge erzeugt wird, der kollinear zum ersten Laserstrahl verläuft, einen zweiten nichtlinearen Kristall, in dem aus dem ersten und zweiten Laserstrahl durch Frequenzmischung ein dritter Laserstrahl mit einer dritten Wellenlänge erzeugt wird, sowie eine im Strahlengang zwischen dem ersten und dem zweiten nichtlinearen Kristall angeordnete Optik zur Separation der Laserstrahlen voneinander. Die Erfindung betrifft auch ein zugehöriges Verfahren zur Frequenzkonversion.

Zur Erzeugung von UV-Laserlicht mit einer mittleren Leistung, d.h. in einem Leistungsbereich von ca. 0 bis 30 Watt, kann aus einer von einem Laseroszillator gelieferten ersten Wellenlänge (Grundwellenlänge) von z.B. λ₁ = 1064 nm in einem ersten Schritt mithilfe des ersten nichtlinearen Kristalls mit nichtkritischer Phasenanpassung ein frequenzverdoppelter Laserstrahl mit einer zweiten Wellenlänge (sog. zweite Harmonische) von z.B. λ₂ = λ₁ / 2 = 532 nm erzeugt werden (sog. "second harmonic generation" SHG). Die Grundwelle und die zweite Harmonische sind hierbei linear polarisiert und weisen zueinander senkrechte Polarisationsrichtungen auf. Die Grundwelle und die zweite Harmonische erzeugen dann in dem zweiten nichtlinearen Kristall mit kritischer Phasenanpassung eine Summenfrequenz gemäß 1/ λ₃ = 1/ λ₁ + 1/ λ₂ = 3 / λ₁ (sog. "sum frequency generation", SFG), d.h. im vorliegenden Beispiel einen dritten Laserstrahl mit einer Wellenlänge λ₃ = 355 nm, die wie gewünscht im UV-Bereich liegt.

Die so genannte kritische Phasenanpassung in einem nichtlinearen Kristall bewirkt, dass die Wellenvektoren der drei an der Frequenzmischung beteiligten Wellen die Bedingung k₃ = k₂ + k₁ erfüllen (für SHG gilt k₂ = 2 k₁). Aufgrund der doppelbrechenden Eigenschaften des nichtlinearen Kristalls führt die kritische Phasenanpassung aber dazu, dass einer der beiden eintretenden Laserstrahlen (außerordentlich polarisierte Welle) unter dem so genannten "Walk-off" Winkel von dem zweiten eintretenden Laserstrahl (ordentlich polarisierte Welle) wegläuft. Die beiden Laserstrahlen sind dann nach einer gewissen Propagationsstrecke innerhalb des nichtlinearen Kristalls separiert und weisen einen sogenannten räumlichen Walk-off auf.

Bei der Erzeugung von UV-Laserlicht mit hoher Leistung auf die eingangs beschriebene Weise ist die Grundwelle in dem zweiten Kristall typischerweise ordentlich polarisiert während die zweite Harmonische in dem Kristall außerordentlich polarisiert ist, so dass in dem zweiten nichtlinearen Kristall der Walk-off Effekt auftritt. Im ersten nichtlinearen Kristall wird hingegen eine unkritische Phasenanpassung verwendet, so dass dort kein Walk-off Effekt auftritt und die Grundwelle und die zweite Harmonische kollinear aus dem Kristall austreten.

Der Walk-off zwischen der Grundwelle und der zweiten Harmonischen im zweiten nichtlinearen Kristall vermindert die Effizienz bei der Erzeugung der dritten Harmonischen (UV-Strahlung), da die Wechselwirkungslänge, in der die Frequenzkonversion stattfindet, abnimmt. Durch die Kompensation des Walk-off-Effekts wird die Wechselwirkungslänge vergrößert, wodurch die Effizienz bei der Erzeugung der UV-Strahlung merklich ansteigt.

In der Schrift DE10143709 A1 wird ein Verfahren zur Kompensation des Walk-off Effekts bei Frequenzkonversion vorgestellt. Bei diesem Verfahren wird ein erster nichtlinearer Lithiumtriborat(LBO)-Kristall mit nichtkritischer Phasenanpassung zur Frequenzverdopplung verwendet und ein zweiter LBO-Kristall mit kritischer Phasenanpassung zur Erzeugung der dritten Harmonischen eingesetzt. Zwischen dem ersten und zweiten nichtlinearen Kristall wird ein doppelbrechender Kristall angeordnet, bei dem nichtlineare optische Eigenschaften vermieden sind. Durch den doppelbrechenden Kristall wird ein Walk-off erzeugt, der zu einem Strahlversatz der Grundwelle und der zweiten Harmonischen auf dem zweiten nichtlinearen Kristall führt. Der Strahlversatz ist dem Walk-off des zweiten LBO-Kristalls entgegengesetzt gerichtet und soll diesen kompensieren.

Bei dem in der DE10143709 A1 beschriebenen Aufbau muss aber eine zusätzliche Komponente (doppelbrechender Kristall) im Strahlengang positioniert werden. Dies führt zu einem höheren Justageaufwand. Da die Doppelbrechung des Kristalls, die dem Walk-off Effekt des zweiten nichtlinearen Kristalls entgegenwirkt, temperaturabhängig ist, muss der zur Separation der Laserstrahlen verwendete doppelbrechende Kristall außerdem noch auf konstanter Temperatur gehalten werden.

Die Druckschrift EP 0503875 A2 offenbart eine weitere Möglichkeit zur Walk-off Kompensation bei nichtlinearen Kristallen mit kritischer Phasenanpassung. Hierbei wird der Walk-off zwischen dem ordentlichen und dem außerordentlichen Strahl dadurch kompensiert, dass beide Strahlen kollinear unter einem Winkel zur Kristalloberfläche auf den Kristall mit kritischer Phasenanpassung treffen. Wenn das Laserlicht unter einem Winkel auf den Kristall trifft, tritt Brechung auf und der Wellenvektor der Strahlung ändert sich in Abhängigkeit von der Polarisationsrichtung um einen unterschiedlichen Betrag. Bei richtiger Wahl des Einfallswinkels und der Orientierung der Kristallachse(n) relativ zur Einfallsfläche des Kristalls kann somit die Kompensation des Walk-offs erreicht werden. Diese Lösung erfordert jedoch ebenfalls einen entsprechend geschnittenen und justierten nichtlinearen Kristall. Typischer Weise ist/sind die Kristallachse(n) hierbei nicht senkrecht bzw. parallel zur Kristalloberfläche ausgerichtet, sondern verlaufen unter einem Winkel zu den Kristalloberflächen. Der Winkel, unter dem der Kristall geschnitten wird, muss daher sehr präzise sein, da ein unpräziser Schnittwinkel nicht durch eine Verkippung bzw. Drehung des gesamten Kristalls kompensiert werden kann.

Die Druckschrift US 2006/0250677 offenbart eine Lösung zur Walk-off Kompensation, bei der die Laserstrahlen ebenfalls am selben Punkt auf den nichtlinearen Kristall auftreffen, aber zuvor mittels einer Optik separiert wurden, so dass sich die Einfallswinkel der Laserstrahlen im Bezug zur Kristalloberfläche voneinander unterscheiden. Während einer der Laserstrahlen z.B. senkrecht auf die Kristalloberfläche trifft, trifft der andere Laserstrahl unter einem Winkel auf den nichtlinearen Kristall. Als Optik zur Separation wird ein Biprisma vor dem nichtlinearen Kristall positioniert. Bei Verwendung von Laserstrahlen unterschiedlicher Wellenlänge wird vorgeschlagen, ggf. einen dichroitischen Strahlteiler zu verwenden. Um eine maximale Walk-off Kompensation zu erreichen, besitzt der nichtlineare Kristall ebenfalls einen optimierten Schnitt, d.h. die Kristallachse verläuft unter einem Winkel zur Kristalloberfläche.

### Aufgabe der Erfindung

Es ist die Aufgabe der vorliegenden Erfindung, eine Einrichtung der eingangs genannten Art dahingehend weiterzubilden, dass eine Kompensation des Walk-off Effekts auf besonders einfache Weise ermöglicht wird.

### Gegenstand der Erfindung

Diese Aufgabe wird erfindungsgemäß gelöst durch eine Einrichtung der eingangs genannten Art, bei der die Optik mindestens eine Linse aufweist, um die räumliche Separation der Laserstrahlen zu bewirken, wobei der erste und zweite Laserstrahl für die wellenlängenabhängige Separation versetzt und/oder verkippt zur optischen Achse der Linse durch die Linse hindurch treten, um die räumliche Separation zu bewirken. Dies ist günstig, da zur Erzielung einer guten Konversionseffizienz die Laserstrahlen in der Regel (bei den hier verwendeten Pumpleistungen) fokussiert werden müssen, so dass die zu diesem Zweck ohnehin im Strahlengang angeordneten Linsen zusätzlich zur Strahlformung bzw. Abbildung auch zur räumlichen Separation der Laserstrahlen verwendet werden können.

Durch den Versatz bzw. die Verkippung der Laserstrahlen zur optischen Achse der Linse treffen diese nicht senkrecht auf die Linseneintrittsfläche und die Linsenaustrittsfläche, so dass die Laserstrahlen aufgrund der unterschiedlichen Wellenlängen beim Eintritt in die Linse sowie beim Austritt aus der Linse jeweils mit unterschiedlichen Winkeln gebrochen werden. Die Laserstrahlen verlaufen nach dem Austritt aus der Linse daher nicht mehr kollinear, sondern weisen einen Winkel zueinander auf. Die Erfinder haben erkannt, dass zur Kompensation des räumlichen Walk-off Effekts eine relativ kleine Verschiebung bzw. Verkippung der Laserstrahlen relativ zur optischen Achse der Linsen ausreichend ist, so dass eine zu starke Elliptizität der Laserstrahlen vermieden werden kann.

In der Regel werden in der Optik fokussierende Linsen (Sammellinsen) verwendet, die typischerweise als Bikonvexlinsen ausgebildet sind. Es können ggf. aber auch andere Typen von Sammellinsen, z.B. Plankonvex- oder Konkav-Konvexlinsen eingesetzt werden. Wesentlich ist, dass das verwendete Linsenmaterial einen wellenlängenabhängigen Brechungsindex aufweist, wobei der Unterschied im Brechungsindex für die unterschiedlichen verwendeten Laserwellenlängen möglichst groß sein sollte. Bei den hier verwendeten Wellenlängen haben sich Quarzglas und BK7 Glas als besonders geeignete Linsenmaterialien herausgestellt. Bei Quarzglas liegt der Brechungsindex-Unterschied zwischen 1064 nm und 532 nm bei ca. Δn = 0.0108. Bei BK7 Glas beträgt der Unterschied sogar Δn = 0.01284. Andere Materialien haben in der Regel kleinere Brechungsindex-Unterschiede.

Zusätzlich zur Verschiebung bzw. Verkippung der Linse(n) kann mindestens eine der Linsen aus doppelbrechendem Material bestehen, um die Separation zu bewirken. Da bei den vorliegenden Pumpleistungen die Linse ohnehin zur Fokussierung benötigt wird, ergibt sich bei der Verwendung der Linse zur Separation der Laserstrahlen kein erhöhter Justageaufwand.

Es hat sich als günstig herausgestellt, wenn die Optik bzw. die Linsen einen Strahlversatz zwischen dem ersten und dem zweiten Laserstrahl auf einer Strahleintrittsfläche des zweiten nichtlinearen Kristalls erzeugt, da in diesem Fall in der Regel ein quaderförmiger Standard kristall verwendet werden kann Es versteht sich aber, dass ggf. die separierten Laserstrahlen auch in unterschiedlichen Winkeln an einem gemeinsamen Punkt auf der Eintrittsfläche eines entsprechend geschnittenen nichtlinearen Kristalls auftreffen können, um den Walk-off Effekt auf die in der US 2006/0250677 beschriebene Weise zu kompensieren.

Bei einer Ausführungsform weist die Optik eine erste Linse zur Kollimation des aus dem ersten nichtlinearen Kristall austretenden ersten und zweiten Laserstrahls sowie eine zweite Linse zur Fokussierung des ersten und zweiten Laserstrahls auf den zweiten nichtlinearen Kristall auf. Wenn die Laserstrahlen durch beide Linsen außermittig verlaufen, können beide Linsen zur Separation der Laserstrahlen beitragen. Auf diese Weise kann eine ausreichende Separation der Laserstrahlen erreicht werden, ohne dass hierzu ein zu starker Versatz der Laserstrahlen zur optischen Achse bei einerjeweiligen Linse erforderlich ist. Es versteht sich, dass die Optik auch mehr oder weniger als zwei Linsen aufweisen kann.

Ein weiterer Vorteil bei der Verwendung der Linsen liegt darin, dass der Laserstrahl mit der kürzeren Wellenlänge etwas stärker gebrochen wird, sodass der Fokus des zweiten Laserstrahls (mit 532 nm) näher an der Linse liegt als der Fokus des ersten Laserstrahls (mit 1064mm). Dies führt dazu, dass innerhalb der Wechselwirkungslänge im zweiten Kristall der Durchmesser des zweiten Laserstrahls etwas kleiner ist als der Durchmesser des ersten Laserstrahls, was sich ais vorteilhaft für die Frequenzkonversion herausgestellt hat. Der hierdurch erzeugte positive Effekt für die Frequenzkonversion ist aber kleiner als der durch die räumliche Walk-off-Kompensation erzielte Effekt.

Bei einer Ausführungsform weist die Anordnung eine vor dem ersten nichtlinearen Kristall angeordnete weitere Linse zur Fokussierung der Laserstrahlung auf den ersten nichtlinearen Kristall auf. Durch die weitere Linse kann die Konversionseffizienz in dem ersten nichtlinearen Kristall erhöht werden. Die Brennweite der weiteren Linse kann hierbei beispielsweise mit der Brennweite der ersten Linse übereinstimmen.

In einer weiteren Ausführungsform weist die Anordnung eine Bewegungseinrichtung zur Bewegung der mindestens einen für die Separation verwendeten Linse senkrecht zur optischen Achse auf. Wie oben dargestellt wird die Grundwelle und die zweite Harmonische mittels einer oder mehrerer Linsen zur UV-Erzeugung in den zweiten Kristall fokussiert. Durch Verschiebung der Linse(n) in der kritischen Richtung aus der optischen Achse wird durch die Brechung ein Auseinanderlaufen der Laserstrahlen und damit ein Strahlversatz zwischen den beiden Laserstrahlen erzeugt, wodurch die Wechselwirkungslänge im zweiten nichtlinearen Kristall verlängert und damit die Effizienz der UV-Erzeugung erhöht werden kann. Idealerweise wird der durch die Linsen erzeugte Strahlversatz so gewählt, dass sich die Strahlen in der Mitte des zweiten nichtlinearen Kristalls genau überlagern.

Die Bewegungseinrichtung kann zur Einstellung des gewünschten Strahlversatzes dienen, der ggf. bei einer Temperaturschwankung der nichtlinearen Kristalle angepasst werden sollte. Die Bewegungseinrichtung kann hierbei gegebenenfalls mit einer Regeleinrichtung gekoppelt werden, welche mit einem Detektor zur Messung der Ausgangsleistung des dritten Laserstrahls gekoppelt ist und den Strahlversatz so einstellt, dass die Ausgangsleistung maximal wird. Alternativ ist es selbstverständlich auch möglich, die Kristalltemperatur zu stabilisieren.

In einer vorteilhaften Ausführungsform bestehen/besteht der erste und/oder der zweite nichtlineare Kristall aus Lithiumtriborat. Dieses Material hat sich insbesondere bei der Verwendung von Laserstrahlung mit einer Grundwellenlänge von ca. 1064 nm bewährt, wie sie z.B. von einem Nd:YVO₄-Laser geliefert wird.

Die Anordnung kann weiterhin einen Laseroszillator zur Erzeugung des ersten Laserstrahls umfassen, wobei die nichtlinearen Kristalle typischerweise resonatorextern angeordnet sind. Es versteht sich, dass zwischen dem Laseroszillator und dem ersten Kristall noch weitere Bauelemente, z.B. ein Laserverstärker, zwischengeschaltet sein können. Die erste Wellenlänge, die zur Frequenzkonversion genutzt wird, entspricht bei resonatorexterner Anordnung der nichtlinearen Kristalle einer Grundfrequenz des Laseroszillators, die insbesondere bei 1064 nm liegen kann.

Ein weiterer Aspekt der Erfindung ist realisiert in einem Verfahren zur Frequenzkonversion von Laserstrahlung, umfassend: Erzeugen eines zweiten Laserstrahls mit einer zweiten Wellenlänge durch Frequenzverdopplung eines ersten Laserstrahls mit einer ersten Wellenlänge in einem ersten nichtlinearen Kristall, wobei der zweite Laserstrahl kollinear zum ersten Laserstrahl verläuft; Erzeugen eines dritten Laserstrahls mit einer dritten Wellenlänge aus dem ersten und zweiten Laserstrahl durch Frequenzmischung in einem zweiten nichtlinearen Kristall, wobei der erste und zweite Laserstrahl an einer im Strahlengang zwischen dem ersten und dem zweiten nichtlinearen Kristall angeordneten Optik voneinander räumlich separiert werden. Um die Separation zu bewirken, treten der erste und zweite Laserstrahl versetzt und/oder verkippt zur optischen Achse mindestens einer Linse der Optik hindurch. Zusätzlich kann die Linse auch aus doppelbrechendem Material bestehen, um die räumliche Separation zu bewirken.

Weitere Vorteile der Erfindung ergeben sich aus der Beschreibung und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fign. 1a,b: schematische Darstellungen von Ausführungsformen einer erfindungsgemäßen Einrichtung zur Frequenzkonversion von Laserstrahlung mit zwei nichtlinearen Kristallen und zwei Linsen bzw. mit einer Linse zur Walk-off Kompensation, und
- Fign. 2a,b: eine schematische Darstellung des zweiten nichtlinearen Kristalls mit kritischer Phasenanpassung mit Walk-off Kompensation (Fig. 2a) und ohne Walk-off Kompensation (Fig. 2b).

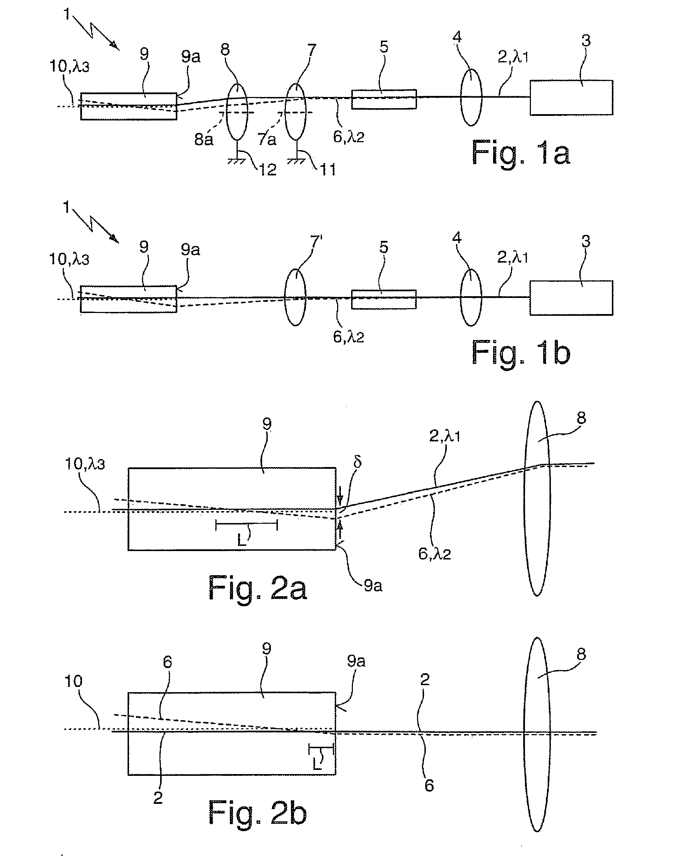

**Fig. 1a** zeigt eine Anordnung **1** zur Frequenzkonversion eines ersten Laserstrahls **2** mit einer ersten Wellenlänge λ₁ von 1064 nm, der von einem Laseroszillator **3** erzeugt wird. Der Laseroszillator 3 weist im vorliegenden Beispiel einen Nd:YVO₄-Laserkristall als Lasermedium auf. Der aus dem Laseroszillator 3 austretende erste Laserstrahl 2 wird mittels einer Linse **4** in einen ersten optisch nichtlinearen Kristall **5** fokussiert, der als Lithiumtriborat(LBO)-Kristall ausgebildet ist. In dem nicht kritisch phasenangepassten ersten nichtlinearen Kristall 5 wird aus dem ersten Laserstrahl 2 durch Frequenzverdopplung ein zweiter Laserstrahl **6** mit einer zweiten Wellenlängen λ₂ = λ₁ / 2 = 532 nm erzeugt, d.h. der erste nichtlineare Kristall 5 dient der Erzeugung der zweiten Harmonischen. Wegen der nicht kritischen Phasenanpassung tritt in dem ersten nichtlinearen Kristall 5 kein Walk-off Effekt auf, sodass der erste und der zweite Laserstrahl 2, 6 den ersten nichtlinearen Kristall 5 kollinear verlassen. Die beiden Laserstrahlen 2, 6 sind beim Austritt aus dem ersten Kristall 5 linear polarisiert, wobei deren Polarisationsrichtungen senkrecht aufeinander stehen.

Nach dem Verlassen des ersten LBO-Kristalls 5 werden die kollinearen Laserstrahlen 2, 6 zunächst mit einer ersten Linse **7** kollimiert, welche die gleiche Brennweite besitzt wie die zur ersten Fokussierung benutzte (weitere) Linse 4. Danach werden die Laserstrahlen 2, 6 mit einer zweiten Linse **8** in einen zweiten LBO-Kristall **9** fokussiert, um durch Frequenzmischung aus dem ersten und zweiten Laserstrahl 2, 6 einen dritten Laserstrahl **10** (dritte Harmonische) mit einer Wellenlänge λ₃ von 355 nm, d.h. im UV-Wellenlängenbereich, zu erzeugen. Im zweiten LBO-Kristall 9 wird die kritische Phasenanpassung genutzt, um aus dem ersten und zweiten Laserstrahl 2, 6 die Summenfrequenz zu bilden (SFG).

Wie in **Fig. 2b** dargestellt ist, führt die kritische Phasenanpassung zu einer räumlichen Trennung des zweiten Laserstrahls 6 vom ersten Laserstrahl 2 in dem zweiten Kristall 9, obwohl beide Laserstrahlen 2, 6 an derselben Stelle kollinear und senkrecht zu einer Eintrittsebene **9a** auf den zweiten Kristall 9 auftreffen. Dies kommt dadurch zu Stande, dass beide Laserstrahlen 2, 6 unterschiedliche Polarisationsrichtungen aufweisen, so dass der zweite Laserstrahl 6 in dem doppelbrechenden zweiten Kristall 9 außerordentlich polarisiert ist, während der erste Laserstrahl eine ordentliche Polarisation besitzt.. Der Walk-off Effekt bewirkt, dass die beiden ordentlich bzw. außerordentlich polarisierten Laserstrahlen 2, 6 auseinander laufen und ein Überlappungsbereich **L,** d.h. eine Länge in dem zweiten Kristall 9, in dem die Frequenz-Konversion stattfindet, sich deutlich reduziert. Die außerhalb des Überlappungsbereichs noch vorhandene Länge des zweiten Kristalls 9 trägt nicht mehr zur Erzeugung von Laserstrahlung bei der dritten Wellenlänge λ₃ bei.

Um dieses Problem möglichst weitgehend zu vermeiden, verlaufen bei der Anordnung 1 von Fig. 1 a die beiden Laserstrahlen 2, 6 versetzt zur optischen Achse **7a, 8a** durch die erste und zweite Linse 7, 8. Da die Laserstrahlen 2, 6 nicht senkrecht auf die Linsenoberflächen auftreffen, unterscheidet sich die Strahlrichtung, unter der der zweite Laserstrahls 6 mit einer Wellenlängen λ₂ von 532 nm gebrochen wird, von der Strahlrichtung des ersten Laserstrahls 2, der eine Wellenlänge λ₁ von 1064 nm aufweist. Die beiden Laserstrahlen 2, 6 laufen somit auseinander und treten daher nicht mehr an derselben Stelle in den zweiten LBO-Kristall 9 ein, sondern weisen einen Strahlversatz δ auf der Eintrittsfläche 9a auf. Für die Verschiebung der beiden Linsen 7, 8 wurde hierbei eine Richtung gewählt, die eine Verschiebung des Eintrittspunkts des zweiten Laserstrahls 6 in einer dem Walk-off entgegengesetzten Richtung bewirkt, so dass die beiden Laserstrahlen 2, 6 in dem zweiten Kristall 9 ineinander hineinlaufen. Wie sich bei einem Vergleich von **Fig. 2a** mit Fig. 2b ergibt, kann auf diese Weise die Wechselwirkungslänge L, in der die Frequenzkonversion stattfindet, gesteigert werden, so dass sich die Effizienz der UV-Erzeugung, d.h. der erzeugten Leistung des dritten Laserstrahls 10 erhöht.

Idealerweise wird der durch die Linsen 7, 8 erzeugte Strahlversatz o̅ so gewählt, dass sich die beiden Laserstrahlen 2, 6 in einem Überlappungsbereich in Mitte des zweiten LBO-Kristalls 9 überlagern. Um eine Einstellbarkeit des Strahlversatzes ö zu gewährleisten, sind zwei Manipulatoren **11, 12** (z.B. Linearmotoren) an den Linsen 7, 8 vorgesehen, welche an deren Fassungen angreifen und eine Verschiebung senkrecht zu deren optischen Achsen bewirken. Es versteht sich, dass zusätzlich oder alternativ zur hier gezeigten Verschiebung auch eine Verkippung der Linsen 7, 8 möglich ist, um eine Separation zu bewirken. Wesentlich für die Separation ist es, dass die Laserstrahlen 2, 6 nicht senkrecht auf die Eintrittsflächen und Austrittsflächen der Linsen 7, 8 stehen, wie dies z.B. beim Durchtritt entlang der optischen Achse 7a, 8a der Fall ist, da in diesem Fall keine Separation erfolgen kann (vgl. Fig. 2b).

Die Anordnung 1 von Fig. 1a kann auch geeignet modifiziert werden. So ist es wie in **Fig. 1b** dargestellt beispielsweise auch möglich, zwischen dem ersten und dem zweiten LBO-Kristall 5, 9 an Stelle der beiden Linsen 7, 8 nur eine einzige Linse **7'** mit einer kleineren Brennweite zu verwenden. Im vorliegenden Fall ist die Linse 7' so positioniert, dass die beiden Laserstrahlen 2, 6 paraxial, d.h. entlang der optischen Achse auf die Linse 7' auftreffen. Die Linse 7' von Fig. 1b besteht im Gegensatz zu den Linsen 7, 8 von Fig. 1a aus einem doppelbrechenden Material, z.B. aus Calcit, in dem der erste Laserstrahl 2 ordentlich und der zweite Laserstrahl 6 außerordentlich gebrochen werden, wodurch die Separation bewirkt wird. Hierbei kann ausgenutzt werden, dass der erste und der zweite Laserstrahl 2, 6 beim Austritt aus dem ersten Kristall 5 zueinander senkrechte Polarisationsrichtungen aufweisen.

Es versteht sich, dass auch Kombinationen der in Fig. 1a und Fig. 1b dargestellten Anordnungen möglich sind. Beispielsweise können bei der in Fig. 1a dargestellten Anordnung 1 eine oder beide Linsen 2, 6 auch aus doppelbrechendem Material bestehen. Es versteht sich weiterhin, dass auch Frequenzumwandlungen bei anderen als den hier beschriebenen Frequenzen bzw. Wellenlängen erfolgen können. Auch können zur Trennung der aus dem zweiten nichtlinearen Kristall 9 austretenden Laserstrahlen 2, 6, 10 zusätzliche optische Elemente wie z.B. dichroitische Spiegel oder Prismen verwendet werden.

## Patentansprüche

1. Anordnung (1) zur Frequenzkonversion von Laserstrahlung, umfassend:
einen ersten nichtlinearen Kristall (5), in dem aus einem ersten, eintretenden Laserstrahl (2) mit einer ersten Wellenlänge (λ₁) durch Frequenzverdopplung ein zweiter Laserstrahl (6) mit einer zweiten Wellenlänge (λ₂) erzeugt wird, der kollinear zum ersten Laserstrahl (2) verläuft,
einen zweiten nichtlinearen Kristall (9), in dem aus dem ersten und zweiten Laserstrahl (2, 6) durch Frequenzmischung ein dritter Laserstrahl (10) mit einer dritten Wellenlänge (λ₃) erzeugt wird,
sowie eine zwischen dem ersten und dem zweiten nichtlinearen Kristall (5, 9) angeordnete Optik (7, 7', 8) zur räumlichen Separation der Laserstrahlen (2, 6) voneinander,
**dadurch gekennzeichnet,**
**dass** die Optik mindestens eine Linse (7, 7', 8) aufweist, wobei der erste und zweite Laserstrahl (2, 6) versetzt und/oder verkippt zur optischen Achse der Linse (7a, 8a) durch die Linse (7, 8) hindurch treten, um die räumliche Separation zu bewirken.

2. Anordnung nach Anspruch 1, bei der die Linse (7') aus doppelbrechendem Material besteht, um die räumliche Separation zu bewirken.

3. Anordnung nach einem der vorhergehenden Ansprüche, bei der die Optik (7, 7', 8) einen Strahlversatz (δ) zwischen dem ersten und dem zweiten Laserstrahl (2, 6) auf einer Strahleintrittsfläche (9a) des zweiten nichtlinearen Kristalls (9) erzeugt.

4. Anordnung nach einem der vorhergehenden Ansprüche, bei welcher die Optik (7, 8) eine erste Linse (7) zur Kollimation des aus dem ersten nichtlinearen Kristall (5) austretenden ersten und zweiten Laserstrahls (2, 6) sowie eine zweite Linse (8) zur Fokussierung des ersten und zweiten Laserstrahls (2, 6) auf den zweiten nichtlinearen Kristall (9) aufweist.

5. Anordnung nach einem der vorhergehenden Ansprüche, weiter umfassend: eine vor dem ersten nichtlinearen Kristall (5) angeordnete weitere Linse (4) zur Fokussierung des ersten Laserstrahls (2) auf den ersten nichtlinearen Kristall (5).

6. Anordnung nach einem der vorhergehenden Ansprüche, weiter umfassend: eine Bewegungseinrichtung (11, 12) zur Bewegung der mindestens einen Linse (7, 8) senkrecht zur optischen Achse der Linse (7a, 8a).

7. Anordnung nach einem der vorhergehenden Ansprüche, bei welcher der erste und/oder der zweite nichtlineare Kristall (5, 9) aus Lithiumtriborat bestehen/besteht.

8. Anordnung nach einem der vorhergehenden Ansprüche, weiter umfassend: einen Laseroszillator (3) zur Erzeugung des ersten Laserstrahls (2).

9. Anordnung nach Anspruch 8, bei welcher die erste Wellenlänge (λ₁) einer Grundfrequenz des Laseroszillators (3), insbesondere einer Wellenlänge von 1064 nm, entspricht.

10. Verfahren zur Frequenzkonversion von Laserstrahlung, umfassend:
Erzeugen eines zweiten Laserstrahls (6) mit einer zweiten Wellenlänge (λ₂) durch Frequenzverdopplung eines ersten Laserstrahls (2) mit einer ersten Wellenlänge (λ₁) in einem ersten nichtlinearen Kristall (5), wobei der zweite Laserstrahl (6) kollinear zum ersten Laserstrahl (2) verläuft,
Erzeugen eines dritten Laserstrahls (10) mit einer dritten Wellenlänge (λ₃) aus dem ersten und zweiten Laserstrahl (2, 6) durch Frequenzmischung in einem zweiten nichtlinearen Kristall (9),
wobei der erste und zweite Laserstrahl (2, 6) an einer im Strahlengang zwischen dem ersten und dem zweiten nichtlinearen Kristall (5, 9) angeordneten Optik (7, 7' 8) voneinander räumlich separiert werden,
**dadurch gekennzeichnet,**
**dass** der erste und zweite Laserstrahl (2, 6) versetzt und/oder verkippt zur optischen Achse (7a, 8a) mindestens einer Linse (7, 7', 8) der Optik hindurch treten, um die räumliche Separation zu bewirken.

11. Verfahren nach Anspruch 10, bei dem die Linse (7') aus doppelbrechendem. Material besteht, um die räumliche Separation zu bewirken.

## Claims

1. An arrangement (1) for the frequency conversion of laser radiation, comprising:
a first nonlinear crystal (5), in which, from a first incoming laser beam (2) having a first wavelength (λ₁) a second laser beam (6) having a second wavelength (λ₂) is generated by means of frequency doubling, said second laser beam running collinearly with respect to the first laser beam (2),
a second nonlinear crystal (9), in which a third laser beam (10) having a third wavelength (λ₃) is generated from the first and second laser beam (2, 6) by means of frequency mixing,
and an optical system (7, 7', 8) arranged between the first and the second nonlinear crystal (5, 9) and serving for spatially separating the laser beams (2, 6) from one another,
**characterised in that**
the optical system comprises at least one lens (7, 7', 8), wherein the first and second laser beam (2, 6) pass through the lens (7, 8) offset and/or tilted with respect to the optical axis (7a, 8a) of the lens in order to effect the spatial separation.

2. An arrangement according to claim 1, in which the lens (7') consists of birefringent material in order to effect the spatial separation.

3. An arrangement according to any one of the preceding claims, in which the optical system (7, 7', 8) produces an offset (δ) between the first and the second laser beam (2, 6) at a beam entrance face (9a) of the second nonlinear crystal (9).

4. An arrangement according to any one of the preceding claims, in which
the optical system (7, 8) comprises a first lens (7) for collimating the first and second laser beam (2, 6) emerging from the first nonlinear crystal (5) and a second lens (8) for focussing the first and second laser beam (2, 6) onto the second nonlinear crystal (9).

5. An arrangement according to any one of the preceding claims, further comprising: a further lens (4) arranged in front of the first nonlinear crystal (5) for focussing the first laser beam (2) onto the first nonlinear crystal (5).

6. An arrangement according to any one of the preceding claims, further comprising: a movement device (11, 12) for moving the at least one lens (7, 8) perpendicularly to the optical axis (7a, 8a) of the lens.

7. An arrangement according to any one of the preceding claims, in which the first and/or the second nonlinear crystal (5, 9) consist/consists of lithium triborate.

8. An arrangement according to any one of the preceding claims, further comprising: a laser oscillator (3) for generating the first laser beam (2).

9. An arrangement according to claim 8, in which the first wavelength (λ₁) corresponds to a fundamental frequency of the laser oscillator (3), in particular a wavelength of 1064 nm.

10. A method for the frequency conversion of laser radiation, comprising:
generating a second laser beam (6) having a second wavelength (λ₂) by frequency doubling of a first laser beam (2) having a first wavelength (λ₁) in a first nonlinear crystal (5), wherein the second laser beam (6) runs collinearly with respect to the first laser beam (2),
generating a third laser beam (10) having a third wavelength (λ₃) from the first and second laser beam (2, 6) by means of frequency mixing in a second nonlinear crystal (9),
wherein the first and second laser beam (2, 6) are spatially separated from each other at an optical system (7, 7', 8) arranged in the beam path between the first and the second nonlinear crystal (5, 9),
**characterised in that**
the first and second laser beam (2, 6) pass through offset and/or tilted with respect to the optical axis (7a, 8a) of at least one lens (7, 7', 8) of the optical system in order to effect the spatial separation.

11. A method according to claim 10, in which the lens (7') consists of birefringent material in order to effect the spatial separation.

## Revendications

1. Agencement (1) pour la conversion de fréquence d'un rayonnement laser, comprenant :
un premier cristal non linéaire (5), dans lequel, à partir d'un premier rayon laser entrant (2), d'une première longueur d'onde (λ₁), est généré par doublement de fréquence un deuxième rayon laser (6) d'une deuxième longueur d'onde (λ₂) qui se propage colinéairement au premier rayon laser (2),
un deuxième cristal non linéaire (9), dans lequel, à partir du premier et du deuxième rayon laser (2, 6), est généré par mélange de fréquences un troisième rayon laser (10) d'une troisième longueur d'onde (λ₃),
ainsi qu'une optique (7, 7', 8) disposée entre le premier et le deuxième cristal non linéaire (5, 9) pour séparer spatialement les rayons laser (2, 6) l'un de l'autre,
**caractérisé en ce**
**que** l'optique présente au moins une lentille (7, 7', 8), le premier et deuxième rayon laser (2, 6) traversant la lentille (7, 8) de manière décalée et/ou inclinée par rapport à l'axe optique (7a, 8a) de la lentille pour produire la séparation spatiale.

2. Agencement selon la revendication 1, dans lequel la lentille (7') est composée d'un matériau biréfringent pour produire la séparation spatiale.

3. Agencement selon l'une des revendications précédentes, dans lequel l'optique (7, 7, 8) produit un décalage de rayon (δ) entre le premier et le deuxième rayon laser (2, 6) sur une surface d'entrée de rayon (9a) du deuxième cristal non linéaire (9).

4. Agencement selon l'une des revendications précédentes, dans lequel l'optique (7, 8) présente une première lentille (7) pour collimater le premier et deuxième rayon laser (2, 6) sortant du premier cristal non linéaire (5) ainsi qu'une deuxième lentille (8) pour focaliser le premier et deuxième rayon laser (2, 6) sur le deuxième cristal non linéaire (9).

5. Agencement selon l'une des revendications précédentes, comprenant en outre :
une autre lentille (4) disposée avant le premier cristal non linéaire (5) pour focaliser le premier rayon laser (2) sur le premier cristal non linéaire (5).

6. Agencement selon l'une des revendications précédentes, comprenant en outre : un dispositif de déplacement (11, 12) pour déplacer ladite au moins une lentille (7, 8) perpendiculairement à l'axe optique (7a, 8a) de la lentille.

7. Agencement selon l'une des revendications précédentes, dans lequel le premier et/ou le deuxième cristal non linéaire (5, 9) est/sont constitué(s) de triborate de lithium.

8. Agencement selon l'une des revendications précédentes, comprenant en outre : un oscillateur laser (3) pour générer le premier rayon laser (2).

9. Agencement selon la revendication 8, dans lequel la première longueur d'onde (λ₁) correspond à une fréquence fondamentale de l'oscillateur laser (3), en particulier à une longueur d'onde de 1064 nm.

10. Procédé de conversion de fréquence d'un rayonnement laser, consistant à :
générer un deuxième rayon laser (6) d'une deuxième longueur d'onde (λ₂) par doublement de fréquence d'un premier rayon laser (2) d'une première longueur d'onde (λ₁) dans un premier cristal non linéaire (5), le deuxième rayon laser (6) se propageant colinéairement au premier rayon laser (2),
générer un troisième rayon laser (10) d'une troisième longueur d'onde (λ₃) à partir du premier et deuxième rayon laser (2, 6) par mélange de fréquences dans un deuxième cristal non linéaire (9),
le premier et deuxième rayon laser (2, 6) étant séparés spatialement l'un de l'autre sur une optique (7, 7' 8) disposée dans le chemin des rayons entre le premier et le deuxième cristal non linéaire (5, 9),
**caractérisé en ce**
**que** le premier et deuxième rayon laser (2, 6) traversent au moins une lentille (7, 7', 8) de l'optique de manière décalée et/ou inclinée par rapport à l'axe optique (7a, 8a) de ladite au moins une lentille pour produire la séparation spatiale.

11. Procédé selon la revendication 10, dans lequel la lentille (7') est composée d'un matériau biréfringent pour produire la séparation spatiale.
